# EUROPEAN PATENT SPECIFICATION

(11) **EP 4 150 040 B1**
(45) Date of publication and mention of the grant of the patent: **22.05.2024**
(21) Application number: 21723776.7
(22) Date of filing: 11.05.2021
(51) Int. Cl.: C12C 11/11, C12G 3/005, C12G 3/06, B67D 1/00

(54) **SINGLE-SERVE CAPSULE FOR PREPARING ALCOHOLIC BEER**
EINZELPORTIONSKAPSEL ZUR ZUBEREITUNG EINES BIERÄHNLICHEN GETRÄNKS
CAPSULE À USAGE UNIQUE POUR PRÉPARER UNE BOISSON DE TYPE BIÈRE

(30) Priority: 15.05.2020 EP 20175082
(43) Date of publication of application: 22.03.2023
(73) Proprietor: Heineken Supply Chain B.V., 2382 PH Zoeterwoude (NL)
(72) Inventor: BROUWER, Eric Richard, 2382 PH Zoeterwoude (NL); BEKKERS, Augustinus Cornelius Aldegonde Petrus Albert, 2382 PH Zoeterwoude (NL)
(74) Representative: Nederlandsch Octrooibureau
(86) International application number: PCT/EP2021/062509
(87) International publication number: WO 2021/228871

(56) References cited:
- EP-A1- 3 330 216
- WO-A1-2020/055233
- US-A1- 2016 230 133
- Souci ET AL: "Alcohol free beer" In: "Food Composition and Nutrition tables", 1 January 2015 (2015-01-01), MedPharm, XP055795387, pages 1151-1154, the whole document
- D. E. Briggs ET AL: "Brewing: Science and Practice", , 1 January 2004 (2004-01-01), XP055435010, Retrieved from the Internet: URL:http://fars.itvhe.ac.ir/_fars/Document s/99ae7cc8-c9a8-4356-8d24-f6c208322cb7.pdf [retrieved on 2017-12-13]

## Description

### TECHNICAL FIELD OF THE INVENTION

The present invention relates to a single-serve capsule for preparing alcoholic beer, said capsule comprising separate compartments, a first compartment holding a liquid concentrate of an alcohol-free beer and a second compartment holding an alcoholic liquid.

Further, the invention relates to a process of manufacturing said single-serve capsule and a method of preparing beer from said capsule, said method comprising combining the contents of the two compartments and addition of carbonated water.

The single-serve capsule of the present invention shows excellent stability and enables the preparation of a beer of good quality. Due to its low weight and volume, the capsule of the present invention is more easy to transport than ordinary beer and also takes up substantially less storage space.

### BACKGROUND OF THE INVENTION

The popularity of domestic appliances for preparing and dispensing carbonated beverages from concentrated syrup, such as Sodastream^{®}, has grown rapidly. These appliances produce carbonated beverages by carbonating water and mixing the carbonated water with a flavoured syrup. Given the high flexibility and convenience provided by these appliances, it would be desirable to have available beer concentrates from which beer can be produced using similar appliances.

Since beer typically contains more than 90% of water, beer can be concentrated considerably by removing most of the water. The benefits of producing beer from a concentrate have been recognized in the art. However, the production of a beer concentrate that can suitably be used to produce a good quality beer represents a challenging task.

First of all, water should be removed selectively so as to avoid loss of flavour substances, color and/or beer components that contribute to the formation and stability of foam heads. Since the removal of water from beer favours the occurrence of chemical reactions between beer components (e.g. reactions between ethanol and carboxylic acids) and precipitation of solutes (e.g. proteins, sugars), both of which can lead to quality loss during storage, ways need to be found to address these stability issues.

WO 2017/167865 concerns a single-serve container comprising a malt based beverage concentrate or fermented beverage concentrate, characterized in that said concentrate is in a liquid state, has a dynamic viscosity of maximally 40.10³ mPa.s; a real extract density of at least 2,6°P; and an alcohol content of at least 1 vol%. This patent application further describes a method for obtaining a beverage comprising the steps of:
a. providing a first single-serve container comprising the aforementioned malt based beverage concentrate;
b. providing a second single-serve container containing an ethanol solution having an ethanol concentration of 75 vol% or more;
c. providing a liquid diluent source;
d. mixing a portion of the diluent source with the content of the second single-serve container, to obtain an intermediate liquid mixture having an alcohol content of 30 vol% or less;
e. mixing the content of the first single-serve container with said intermediate liquid mixture and potentially an additional amount of the liquid diluent to obtain a beverage.

WO 2018/134285 is directed to a method for preparing a concentrate comprising the steps of
A) subjecting beer or cider (1) to a first concentration step to obtain a retentate (2) and a permeate (3) comprising alcohol (3a) and volatile flavour components (3b),
B) subjecting the permeate (3) to an adsorption step whereby the volatile flavour and alcohol containing permeate is passed over or through an adsorption unit,
C) recovering the flavour components (3b) from the adsorption unit in a further recuperation process
D) combining the retentate (2) with the flavour components (3b).

US 2016/230133 describes a method of preparing a concentrate from an alcoholic beverage, comprising:
- subjecting an alcoholic beverage to a membrane process by which at least some water and alcohol pass through a membrane to be part of a permeate and other components of the alcoholic beverage do not pass through the membrane and are part of a retentate;
- freezing water in the retentate to form ice; and
- removing ice from the retentate to reduce water content and form a beverage concentrate having a solids concentration of at least 30% and an alcohol concentration of 20% or less.

### SUMMARY OF THE INVENTION

The inventors have developed a capsule comprising a beer concentrate of superior stability that can suitably be used to prepare a good quality alcoholic beer by mixing the contents of the capsule with carbonated water.

The capsule of the present invention comprises at least two compartments, including a first compartment and a second compartment; wherein the first compartment comprises a liquid concentrate of an alcohol-free beer, said liquid beer concentrate having an ethanol content of 0-1 % ABV; and wherein the second compartment comprises an alcoholic liquid containing 12-100 wt.% ethanol and 0-88 wt.% water, and wherein ethanol and water together constitute 80-100 wt.% of the alcoholic liquid.

The liquid beer concentrate in the first compartment can suitably be produced by reducing the water content of alcohol-free beer by means of membrane separation (e.g. nanofiltration, reverse osmosis or forward osmosis) and/or by means of freeze concentration.

The inventors have found that the physicochemical stability of the liquid beer concentrate so obtained is very high due to the very low (or zero) ethanol content. Although the inventors do not wish to be bound by theory it is believed that the presence of appreciable levels of ethanol in a liquid beer concentrate can give rise to flavour changes due to the formation of ethyl esters (e.g. ethyl acetate) and/or to haze formation (e.g. due to precipitation of proteins and/or saccharides).

The liquid beer concentrate that is employed in accordance with the present invention additionally offers the advantage that it has a relatively high surface tension due to the virtual absence of ethanol. A high surface tension is advantageous as it reduces unwanted foaming during the filling of the beer concentrate into capsules.

The present invention also provides a process of manufacturing the single serve capsule as described herein before, said process comprising:
- providing an alcohol-free beer having an ethanol content of 0-0.5% ABV;
- reducing the water content of the alcohol-free beer by means of membrane separation and/or freeze concentration to produce a liquid beer concentrate, wherein the membrane filtration is selected from nanofiltration, reverse osmosis and forward osmosis;
- providing a capsule having a first compartment and a second compartment;
- introducing the liquid beer concentrate into the first compartment, optionally after having combined the liquid beer concentrate with one or more other components;
- introducing an alcoholic liquid into the second compartment, optionally after having combined the alcoholic liquid with one or more other components; and
- closing the first and second compartment of the capsule.

The membranes used in nanofiltration, reverse osmosis and forward osmosis retain virtually all components of the alcohol-free beer, except for water and possibly monovalent ions and very small organic molecules (e.g. ethanol). Freeze concentration removes water and virtually nothing else. Thus, both membrane separation and freeze concentration offer the advantage that components that are important to the taste, mouthfeel and stability of the beer are effectively retained in the liquid beer concentrate.

A good quality alcoholic beer can be produced using the singe-serve capsule of the present invention by:
- introducing the single serve capsule into a beverage preparation device;
- releasing the liquid beer concentrate from the first compartment;
- releasing the alcoholic liquid from the second compartment;
- combining the released liquid beer concentrate, the released alcoholic liquid, water and carbon dioxide to produce an alcoholic beer; and
- dispensing the alcoholic beer.

### FIGURES

Fig. 1 provides a cross-sectional view of a single-serve capsule according to the invention.
Fig. 2 provides a schematic representation of a method of preparing a single-serve capsule according to the invention.
Fig. 3 shows a representation of a beverage preparation device that contains a single serve capsule according to the invention.

### DETAILED DESCRIPTION OF THE INVENTION

Thus, one aspect of the present invention concerns a single-serve capsule comprising at least two compartments, including a first compartment and a second compartment; wherein the first compartment comprises a concentrate of an alcohol-free beer, said liquid beer concentrate having an ethanol content of 0-1 % alcohol by volume (ABV); and wherein the second compartment comprises an alcoholic liquid containing 12-100 wt.% ethanol and 0-88 wt.% water, and wherein ethanol and water together constitute 80-100 wt.% of the alcoholic liquid.

The term "capsule" as used herein refers to a compartmentalized container suitable for separately holding the two liquid components according to the invention.

The term "single-serve" as used herein is a synonym of "monoportion" or "unit dose" and refers to a capsule comprising sufficient amounts of beer concentrate and alcoholic liquid to prepare one serving of reconstituted beer. Typically, one serving of reconstituted beer is in the range of 120 ml to 1000 ml.

The term "beer" as used herein refers to a yeast fermented malt beverage that has optionally been hopped. Beer is commonly produced by a process that comprises the following basic steps:
- mashing a mixture comprising malted barley, optionally supplementary grains and water to produce a mash;
- separating the mash in wort and spent grains;
- boiling the wort to produce a boiled wort;
- fermenting the boiled wort with live yeast to produce a fermented wort;
- subjecting the fermented wort to one or more further process steps (e.g. maturation and filtration) to produce beer; and
- packaging the beer in a sealed container, e.g. a bottle, can or keg.

Hop or hop extract is usually added during wort boiling to impart bitterness and floral, fruity flavor notes to the final beer.

The term "beer concentrate" as used herein refers to beer from which water has been removed, e.g. by means of nanofiltration, reverse osmosis, forward osmosis and/or freeze concentration.

The term "membrane separation" as used herein refers to a separation method in which molecules are separated by passing a feed stream through a membrane that separates it into two individual streams, known as the permeate and the retentate. Examples of membrane separation include nanofiltration, reverse osmosis and forward osmosis.

The term "alcohol-free beer" as used herein, unless indicated otherwise, refers to a beer having an ethanol content of 0-0.5% ABV.

The term "free amino nitrogen" as used herein refers to the combined concentration of individual amino acids and small peptides as determined by EBC method 9.10.1 - Free Amino Nitrogen in Beer by Spectrophotometry (IM).

Concentrations of acids as mentioned herein, unless indicated otherwise, also include dissolved salts of these acids as well as dissociated forms of these same acids and salts.

The term "iso-alpha acids" as used herein refers to substances selected from the group of isohumulone, isoadhumulone, isocohumulone, pre-isohumulone, post-isohumulone and combinations thereof. The term "iso-alpha acids" encompasses different stereo-isomers (cis-iso-alpha acids and trans-iso-alpha acids). Iso-alpha acids are typically produced in beer from the addition of hops to the boiling wort. They may also be introduced into the beer in the form of pre-isomerised hop extract. Iso-alpha-acids are intensely bitter with an estimated threshold value in water of approximately 6 ppm.

The term "hydrogenated iso-alpha acids" refers to substances selected from dihydro-iso-alpha acids, tetrahydro-isoalpha acids, hexahydro-iso-alpha acid and combinations thereof.

The term "hulupones" as used herein refers to substances selected from cohulupone, n-hulupone, adhulupone and combinations thereof. Hulupones are oxidation products of hop beta-acids.

The single serve capsule of the present invention may comprise two or more compartments. Most preferably, the capsule contains two compartments, one comprising the liquid beer concentrate, the other comprising the alcoholic liquid.

In accordance with a preferred embodiment, the capsule of the present invention comprises a container with at least two compartments separated by separating wall, including a first compartment containing the liquid beer concentrate and a second compartment containing the alcoholic liquid, and wherein the compartments are closed, e.g. by a sealed foil or a lid.

Preferably the first compartment of the single serve capsule contains 10-60 mL, more preferably 15-50 mL, most preferably 20-40 mL of the liquid beer concentrate.

The second compartment of the single serve capsule preferably contains 4-25 mL, more preferably 6-20 mL, most preferably 7-15 mL of the alcoholic liquid.

The combined internal volume of the first compartment and the second compartment preferably does not exceed 75 mL, more preferably it is in the range of 15-65 mL, most preferably in the range of 20-60 mL.

The liquid beer concentrate and the alcoholic liquid are preferably contained in the capsule in a weight ratio of 7:1 to 1:1, more preferably in a weight ratio of 6:1 to 1.2:1, most preferably in a weight ratio of 5:1 to 1.5:1.

The ethanol content of the liquid beer concentrate preferably does not exceed 0.5% ABV, more preferably it does not exceed 0.3% ABV, most preferably it does not exceed 0.1% ABV.

The pH of the liquid beer concentrate is preferably in the range of 3.0 to 6.0, more preferably in the range of 3.2 to 5.5 and most preferably in the range of 3.5 to 5.0.

The liquid beer concentrate preferably has a water content in the range of 35-80 wt.%, more preferably in the range of 40-75 wt.% and most preferably in the range of 45-70 wt.%.

In a preferred embodiment, the liquid beer concentrate has a density of 20 to 60 °P, more preferably a density of 24 to 50 °P, and most preferably a density of 28 to 42 °P.

Riboflavin, free fatty acids (e.g. linoleic acid), amino acids and small peptides are substances that are naturally present in malted barley and that typically occur in significant concentrations in alcohol-free beer. Likewise, maltotetraose is found in significant concentrations in alcohol-free beer as this oligosaccharide is formed by enzymatic hydrolysis of starch during mashing and is not digested by yeast. Due to the fact that the liquid beer concentrate in the capsule is obtained from alcohol-free beer using a concentration method that only removes water, or only water and low molecular weight substances and ions, the liquid beer concentrate typically contains appreciable levels of riboflavin, linoleic acid, amino acids, peptides and/or maltotetraose.

The riboflavin content of the liquid beer concentrate is preferably in the range of 250-3,000 µg/L more preferably 300-2,500 µg/L, more preferably 350-2,200 µg/L and most preferably 400-2,000 µg/L.

The liquid beer concentrate preferably contain 150-5,000 µg/L, more preferably 200-4,000 µg/L, even more preferably 250-3,500 µg/L and most preferably 300-3,000 µg/L of linoleic acid.

Besides linoleic acid, the liquid beer concentrate typically also contains other fatty acids, such as oleic acid and/or alpha-linolenic acids. Oleic acid is preferably present in the liquid beer concentrate in a concentration of 300-3,000 µg/L, more preferably 400-2,500 µg/L, even more preferably 500-2,000 µg/L and most preferably 600-1,800 µg/L.

Alpha-linolenic acid is preferably present in the liquid beer concentrate in a concentration of 100-1,200 µg/L, more preferably 120-1,100 µg/L, even more preferably 150-1,000 µg/L and most preferably 180-900 µg/L.

The free amino nitrogen (FAN) content of the liquid beer concentrate is preferably in the range of 60-1,000 mg/L more preferably 80-800 mg/L, even more preferably 90-700 mg/L and most preferably 100-600 mg/L.

Unlike the malt sugars maltose and maltotriose, maltotetraose is not significant digested by most brewer's yeasts. Consequently, the concentration of maltotetraose is usually hardly affected by yeast fermentation. Accordingly, the liquid beer concentrate preferably contains 10-100 g/L, more preferably 12-80 g/L, even more preferably 15-60 and most preferably 18-40 g/L of maltotetraose.

In one embodiment of the present invention the liquid beer concentrate is a concentrate of an alcohol-free beer that has been produced by dealcoholisation of an alcoholic beer. The liquid beer concentrate according this embodiment typically contains only a limited amount of maltose and/or maltotriose.

Preferably, the liquid beer concentrate of de-alcoholised beer contains maltose in a concentration of 0-20 g/L, more preferably of 0-15 g/L, even more preferably of 0.5-10 g/L and most preferably of 1-8 g/L.

The liquid beer concentrate of de-alcoholised beer preferably contains maltotriose in a concentration of 1-30 g/L, more preferably of 2-25 g/L, even more preferably of 2.5-22 g/L and most preferably of 3-20 g/L.

In another embodiment of the present invention the liquid beer concentrate is a concentrate of an alcohol-free beer that has been produced using a fermentation method that produces virtually no ethanol. The liquid beer concentrate according this embodiment typically contains relatively high levels of maltose and/or maltotriose.

The liquid beer concentrate according to this embodiment preferably contains maltose in a concentration of 80-400 g/L, more preferably of 100-300 g/L, even more preferably of 140-280 g/L and most preferably of 150-250 g/L.

The liquid beer concentrate obtained from alcohol-free beer that has been produced using an ethanol restricted fermentation preferably contains maltotriose in a concentration of 30-150 g/L, more preferably of 40-120 g/L, even more preferably of 45-110 g/L and most preferably of 50-100 g/L.

According to a particularly preferred embodiment, the liquid beer concentrate is produced by a concentration method that largely retains the acetic acid that is naturally present in beer. Due to the very low ethanol content of the liquid beer concentrate, the presence of acetic acid in the concentrate does not lead to flavour instability as a result of the formation of ethyl acetate.

Preferably, the liquid beer concentrate contains, 100-1,200 mg/L acetic acid, more preferably 120-1,000 mg/L acetic acid, even more preferably 150-900 mg/L acetic acid and most preferably 180-800 mg/L acetic acid.

As explained herein before, the liquid beer concentrate of an alcohol-free beer according to the present invention offers the advantage that it has a relatively high surface tension compared to alcohol containing liquid beer concentrates. Preferably, the liquid beer concentrate has a surface tension of at least 42.5 mN/m, more preferably of 43.5-55 mN/m and most preferably of 45-53 mN/m.

In order to accurately measure the surface tension about 300 mL of concentrate is transferred to an open container that is kept in a water bath set at 20.0°C until the sample is fully degassed. release initial gas. Next, the sample is carefully poured in a wide and large (500 mL) test beaker. In order to assure homogeneity, a plastic disposable stirrer id used to carefully stir the sample. A homogeneous sub-sample of 150 ml is introduced in a measuring cup. Surface tension is measured using a Kr 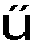 ss 9 tensiometer, equipped with Wilhelmy plate. The instrument protocol is followed, starting with a calibration (pure water = 72,6 mN/m) followed by measuring the surface tension of the samples. In between measurements the probe/plate is carefully cleaned and shortly held (with pincers) in the hot flame of the Bunsen-burner, making sure no residual sample on the probe affects the result of the next measurement.

In a preferred embodiment, the liquid beer concentrate is obtained by means of membrane separation using a membrane with a magnesium sulphate rejection of 80-100%, more preferably 90-100% and most preferably 95-100% when measurement is carried out using 2,000 mg/L aqueous magnesium sulphate solution at 0.48 MPa, 25°C and 15% recovery.

In a preferred embodiment, the liquid beer concentrate is obtained by means of membrane separation using a membrane with a glucose rejection of 80-100%, more preferably 90-100% and most preferably 95-100% when measurement is carried out using 2,000 mg/L aqueous glucose solution at 1.6 MPa, 25°C and 15% recovery.

According to a particularly preferred embodiment, the liquid beer concentrate is obtained by means of reverse osmosis or forward osmosis using a membrane with a sodium chloride rejection of 80-100%, more preferably 90-100% and most preferably 95-100% when measurement is carried out using 2000 mg/L sodium chloride solution at 10.3 bar, 25°C, pH 8 and 15% recovery.

The concentrations of volatile flavour substances and malt sugars in the liquid beer concentrate that is produced by membrane separation and/or freeze concentration of alcohol-free beer is dependent on the type of alcohol-free beer from which the concentrate has been produced. As will be explained in more detail below, alcohol-free beer can suitably be produced by two different types of processes:
- by removing ethanol from an alcoholic beer (e.g. by means of vacuum distillation);
- by restricting formation of ethanol during yeast fermentation.

In one embodiment of the present invention, wherein the liquid beer concentrate is obtained by concentrating an alcohol-free beer that is obtained by de-alcoholisation of alcoholic beer, the concentrate comprises:
- 100-1,200 mg/L of acetic acid;
- 0-20 g/L of maltose;
- 1-30 g/L of maltotriose.

In another embodiment of the present invention, wherein the liquid beer concentrate is obtained by concentrating an alcohol-free beer that is obtained by yeast fermentation with restriction of ethanol formation, the concentrate comprises:
- 0-300 mg/L of acetic acid;
- 80-400 g/L of maltose;
- 30-150 g/L of maltotriose.

The liquid beer concentrate preferably contains 0-500 mg/L, more preferably 0-200 mg/L and most preferably 0-100 mg/L dissolved carbon dioxide.

In a preferred embodiment, the alcoholic liquid contains 13-90 wt.% ethanol and 10-87 wt.% water, more preferably the alcoholic liquid contains 25-85 wt.% ethanol and 15-75 wt.% water, more preferably the alcoholic liquid contains 40-82 wt.% ethanol and 18-60 wt.% water.

Preferably, water and ethanol together constitute 85-100 wt.%, more preferably 90-100 wt.% and most preferably 95-100 wt.% of the alcoholic liquid.

Iso-alpha acids, as well as hydrogenated alpha acids and oxidised alpha-acids (hulupones) contribute to the pleasant bitterness of beers that is appreciated by consumers. Accordingly, in a very preferred embodiment, the liquid beer concentrate and/or the alcoholic liquid contains iso-alpha acids, hydrogenated iso-alpha acids and/or hulupones. In view of the poor water-solubility of hop acids in the liquid beer concentrate, it is preferred that the liquid beer concentrate contains 0-100 mg/L, preferably 0-30 mg/L, more preferably 0-10 mg/L hop acids selected from iso-alpha acids, hydrogenated alpha-acids, hulupones and combinations thereof.

Since solubility of the hop acids in ethanol and ethanol/water mixtures is much higher than solubility of these hop acids in the liquid beer concentrate, it is preferred that at least a part of the hop acids present in the capsule are contained in the alcoholic liquid. Accordingly, in a preferred embodiment, the alcoholic liquid comprises 50-2,000 mg/L, more preferably 100-1,500 mg/L, most preferably 200-1,000 mg/L hop acids selected from iso-alpha acids, hydrogenated alpha-acids, hulupones and combinations thereof.

The alcoholic liquid that is employed in the present capsule may suitably comprise ethanol that is obtained from de-alcoholisation of alcoholic beer. Vacuum distillation is commonly used to remove alcohol from beer. The distillate so obtained contains ethanol, water as well as a range of volatile beer flavour substances. Such distillates may advantageously be applied in the alcoholic liquid of the present capsule, especially if the liquid beer concentrate was produced from de-alcoholised beer. The term "vacuum distillation" as used herein also encompasses "vacuum evaporation".

Accordingly, in a preferred embodiment, the alcoholic liquid comprises a distillate obtained by distillative de-alcoholisation of an alcohol-containing beer. Most preferably, the alcoholic liquid consists of such a distillate or is an aqueous dilution of such a distillate.

Preferably, the alcoholic liquid comprises, per kg of ethanol, 50-2,000 mg, more preferably 70-1,500 mg, even more preferably 90-1,200 mg and most preferably 100-800 mg of ethyl acetate.

Preferably, the alcoholic liquid comprises, per kg of ethanol, 5-200 mg, more preferably 7-150 mg, even more preferably 9-120 mg and most preferably 10-80 mg of isoamyl acetate.

In a preferred embodiment the alcoholic liquid contains, per kg of ethanol, 400-5,000 mg, more preferably 600-4,000 mg, even more preferably 700-3,500 mg and most preferably 800-3,00 mg of amyl alcohols. Here the term "amyl alcohols" refers to alcohols with the formula C₅H₁₂O.

In another preferred embodiment the alcoholic liquid contains, per kg of ethanol, 8-240 mg, more preferably 11-170 mg, even more preferably 13-140 mg and most preferably 15-100 mg of phenyethyl alcohol.

Preferably, the alcoholic liquid contains, per kg of ethanol, 2-50 mg, more preferably 3-40 mg, even more preferably 3.5-32 mg and most preferably 4-25 mg of phenyl ethyl acetate.

Another aspect of the invention concerns a process of manufacturing the single serve capsule as described herein before, said process comprising:
- providing an alcohol-free beer having an ethanol content of 0-0.5% ABV;
- reducing the water content of the alcohol-free beer by means of membrane separation and/or freeze concentration to produce a liquid beer concentrate, wherein the membrane separation is selected from nanofiltration, reverse osmosis and forward osmosis;
- providing a capsule having a first compartment and a second compartment;
- introducing the liquid beer concentrate into the first compartment, optionally after having combined the liquid beer concentrate with one or more other components;
- introducing an alcoholic liquid into the second compartment, optionally after having combined the alcoholic liquid with one or more other components; and
- closing the first and second compartment of the capsule.

The liquid beer concentrate and the alcoholic liquid that are employed in the present process are preferably as defined herein before.

In one embodiment of the present invention the alcohol-free beer is produced by:
- providing an alcoholic beer having an ethanol content of 3-12% ABV; and
- removing ethanol from the beer, preferably by means of distillation or by membrane separation (e.g. nanofiltration, reverse osmosis, osmotic distillation, dialysis or pervaporation), thereby producing an alcohol-free beer and an ethanol-containing distillate.

Preferably, removal of ethanol by distillation is carried out at a temperature in the range of 10-100 °C, more preferably in the range of 20-65 °C, even more preferably in the range of 30-50 °C, and most preferably in the range of 40-46 °C.

The removal of ethanol by distillation is preferably carried out at a pressure in the range of 0.01-500 mbar, more preferably in the range of 1-200 mbar, even more preferably in the range of 5-150 mbar and most preferably in the range of 80-110 mbar.

Ethanol removal by means of membrane separation is preferably carried out by means of nanofiltration, reverse osmosis, osmotic distillation, dialysis or pervaporation, using a membrane that is permeable to water and ethanol. In comparison to the removal of ethanol by distillation a larger fraction of the volatile flavour substances is retained in the de-alcoholised beer.

The alcohol-free beer obtained in the present process after removal of ethanol preferably has an ethanol content of 0-0.4 wt.%, more preferably of 0-0.1 wt.% and most preferably of 0-0.05 wt.%.

The ethanol-containing distillate that is obtained after distillative removal of ethanol from the alcoholic beer preferably has an ethanol content of 10-80 wt.%, more preferably of 15-75 wt.% and most preferably of 20-70 wt.%.

In a preferred embodiment, the alcoholic beer is decarbonated prior to ethanol removal by means of distillation.

According to a particularly preferred embodiment, the ethanol-containing distillate is applied in the alcoholic liquid that is introduced into the second compartment, optionally in combination with one or more other components, such as hop acids or flavourings.

In one embodiment of the invention, distillative removal of ethanol from the alcoholic beer yields a distillate with a high ethanol content of 40-80 wt.%, more preferably of 45-75 wt.% and most preferably of 50-70 wt.%. This distillate may suitably be applied as such in the alcoholic liquid that is introduced into the second compartment of the capsule.

In an alternative embodiment, distillative removal of ethanol from the alcoholic beer yields a distillate with a low ethanol content of 10-40 wt.%, more preferably of 12-35 wt.% and most preferably of 15-30 wt.%. Preferably, this distillate with a low ethanol content is concentrated to an ethanol content of 40-80 wt.%, more preferably of 45-75 wt.% and most preferably of 50-70 wt.%, before the concentrated distillate is applied in the alcoholic liquid that is introduced into the second compartment of the capsule. The ethanol content of the distillate with low ethanol content can suitably be increased to a concentration of 40 wt.% or more by means of distillation or reverse osmosis.

The ethanol-containing distillate having a high ethanol content is preferably applied in the alcoholic liquid in an amount such that the alcoholic liquid contains 60-100 wt.%, more preferably 80-100 wt.% and most preferably 90-100 wt.% of said distillate.

In an alternative embodiment of the present process the alcohol-free beer is produced using a yeast fermentation with restricted formation of ethanol (e.g. cold-contact fermentation).

Cold-contact fermentation is preferably carried out at a temperature below 7 °C, more preferably at -1 to 4 °C, more preferably at -0.5 to 2.5 °C.

Cold-contact fermentation preferably covers a period of 8 - 72 hours, more preferably a period of 12-48 hrs ("cold contact fermented beer").

Another form of restricted ethanol fermentation that may be employed to produce the alcohol-free beer comprises a very short (e.g. less than 2 hours) yeast fermentation at a temperature of 7°C or more, which is followed by rapid temperature inactivation, such as by rapid cooling to -0.5 to 1 °C, optionally followed by subsequent pasteurization ("arrested fermentation").

Another form of restricted ethanol fermentation that can be used utilises a yeast strain which produces relatively low quantities of ethanol under the applied fermentation conditions, such as for example a yeast strain which produces less 0.2 g ethanol per gram fermentable sugar in the wort, preferably less than 0.1 g ethanol per gram fermentable sugar. Suitable strains (e.g. Crabtree negative strains) are known in the art, and the quantity of ethanol produced under varying fermentation conditions can be determined by routine experiments "yeast restricted beer").

Another form of restricted ethanol fermentation that can be employed uses a first, ethanol-producing yeast strain, in the presence of a sufficient quantity of a second yeast strain which consumes virtually all of the ethanol that is produced by the ethanol-producing yeast strain. *Saccharomyces rouxii* is an example of a yeast strain that consumes ethanol.

Yet another form of restricted ethanol fermentation that can be utilised employs a wort having a content of fermentable sugars such that max 1.0 vol.% of alcohol is produced after completion of its fermentation. In this case, the wort generally has a content of fermentable sugars of less than 17.5 g/l, preferably less than 12 g/l, more preferably less than 8 g/l ("sugar deprived wort beer").

In the present process, reducing of the water content of the alcohol-free beer is achieved by membrane separation and/or freeze concentration. Membrane separation of the alcohol-free beer is preferably carried out at a temperature in the range of -2°C to 40°C, more preferably in the range of 3-22°C.

The pressure employed during membrane separation is preferably in the range of 6 to 80 bare, more preferably in the range of 10 to 75 bar, and most preferably in the range of 15 to 70 bar.

According to a particularly preferred embodiment, the liquid beer concentrate is produced by means of reverse osmosis or forward osmosis using a membrane with a nominal salt rejection of at least 60%, more preferably at least 80% and most preferably at least 90% (2000 ppm NaCl, 10.3 bar, 25°C, 15% recovery). More preferably, the liquid beer concentrate is produced by reverse osmosis.

The liquid beer concentrate can also advantageously be produced through a freeze concentration process. In this method, water is withdrawn from the beer by the phase transformation from liquid to ice crystal. This process has mainly three stages: crystallization of water, growth of water crystals and separation of water crystals, performed in specially designed equipment for each purpose. For instance, scraped-surface heat exchanger, growth recrystallizer and separation wash column, respectively. Basically, the temperature of the alcohol-free beer is reduced to a value such as to freeze at least a part of its water without reaching the eutectic point of the mixture. When the ice crystals are sufficiently large, e.g. not smaller than 100 µm in diameter, said crystals can be separated from the concentrated liquid for example using wash-columns. Because of the low process temperature, lower than 0 °C, thermal degradation and aroma losses by evaporation are avoided.

In concentrating beer by freeze concentration, ethanol can become a limiting factor for the maximum degree of concentration. Increasing concentrations of ethanol during the concentration process result in progressively lower crystallization temperatures and progressively higher viscosities. This problem is negated by the present process since the liquid beer concentrate is prepared from alcohol-free beer.

Reduction of the water content of the alcohol-free beer by means of membrane separation and/or freeze concentration is hampered by the presence of significant quantities of dissolved carbon dioxide in the alcohol-free beer. Accordingly, it is preferred to employ an alcohol-free beer containing 0-500 mg/L, more preferably 0-100 mg/L, and most preferably 0-20 mg/L dissolved carbon dioxide.

In a preferred embodiment, the alcohol-free beer employed in the present process is a non-hopped or lightly hopped beer. Accordingly, in a preferred embodiment, the alcohol-free beer contains 0-10 mg/L, more preferably less than 3 mg/L, most preferably less than 1 mg/L hop acids selected from iso-alpha acids, hydrogenated iso-alpha acids, hulupones and combinations thereof.

In a preferred embodiment, the water content of the alcohol-free beer is reduced by at least 70%, more preferably by at least 75%, and most preferably by at least 80%.

The liquid beer concentrate may be combined with one or more other components before it is introduced into the first compartment

In a preferred embodiment, the alcoholic liquid is prepared by combining an ethanol containing liquid, preferably an ethanol-containing distillate as described herein before, with hop acids selected from iso-alpha acids, hydrogenated iso-alpha acids, hulupones and combinations thereof. Even more preferably the alcoholic liquid is prepared by combining an ethanol containing liquid with iso-alpha acids. Iso-alpha acids may suitably be provided in the form of pre-isomerised hop extract.

Flavouring is an example of a component that may suitably be added to the alcoholic liquid before it is introduced into the first compartment.

Another aspect of the invention concerns a method of preparing beer from a liquid beer concentrate, said method comprising:
- introducing the single serve capsule as defined herein before into a beverage preparation device;
- releasing the liquid beer concentrate from the first compartment;
- releasing the alcoholic liquid from the second compartment;
- combining the released liquid beer concentrate, the released alcoholic liquid, water and carbon dioxide to produce an alcoholic beer;
- dispensing the alcoholic beer.

The release of the liquid beer concentrate and the alcoholic liquid may occur simultaneously or sequentially, in whatever order.

Also the combining of the released liquid beer concentrate, the released alcoholic liquid, water and carbon dioxide can be done in different manners.

In one preferred embodiment, first water and carbon dioxide are admixed to produce carbonated water, after which the carbonated water is mixed with the released alcoholic liquid to produce and alcoholic carbonated aqueous liquid that is finally mixed with the released liquid beer concentrate.

In another preferred embodiment, first water and the released alcoholic liquid are admixed to produce a dilute alcoholic liquid, after which carbon dioxide is admixed to produce an alcoholic carbonated aqueous liquid that is finally mixed with the released liquid beer concentrate.

In yet another preferred embodiment, water, carbon dioxide and the released alcoholic liquid are mixed in a single step to produce an alcoholic carbonated aqueous liquid, followed by the admixture of the released liquid beer concentrate.

Preferably, the carbonated water contains 1-8 g/L, more preferably 2-7 g/L dissolved carbon dioxide.

In a preferred embodiment, the beverage preparation device comprises a water reservoir and a reservoir holding pressurized carbon dioxide.

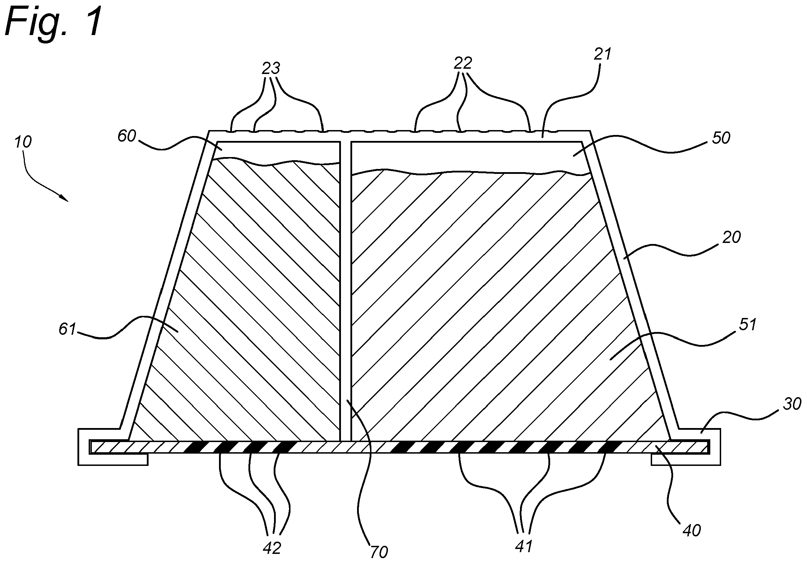

Figure 1 shows a single-serve capsule (10) comprising a body (20)_composed of a sheet of aluminium, having the general shape of a truncated cone with a rim (30) at its base. The body (20) terminates at its smallest end with an obtuse cone (21).

The rim (30) is formed by pinching the body around a foil (40) and the capsule (10) is sealed by thermosealing the body (20) and the foil (40). The foil (40) may be composed of aluminium.

The capsule (10) comprises a first compartment (50) and a second compartment (60), separated by a dividing wall (70). The larger first compartment (50) holds a liquid beer concentrate (51) while the smaller second compartment (60) holds an alcoholic liquid (61).

The obtuse cone (21) comprises weakened recesses (22) in the part that defines the first compartment (50). The obtuse cone (21) further contains weakened recesses (23) in the part that defines the second compartment (60).

The foil (40) comprises a number of weakened sections (41) in the part that defines the first compartment (50) and weakened recesses (42) in the part that defines the second compartment (60).

In use, both the weakened recesses (22) and (23) are punctured by tubular inlets and the weakened sections (41) and (42) in the foil are penetrated by tubular outlets. Next, carbonated water that is injected into the first compartment (50) and into the second compartment (60) through the tubular inlets washes out the liquid beer concentrate (51) from the first compartment (50) and the alcoholic liquid (61) from the second compartment (60) through the output channels.

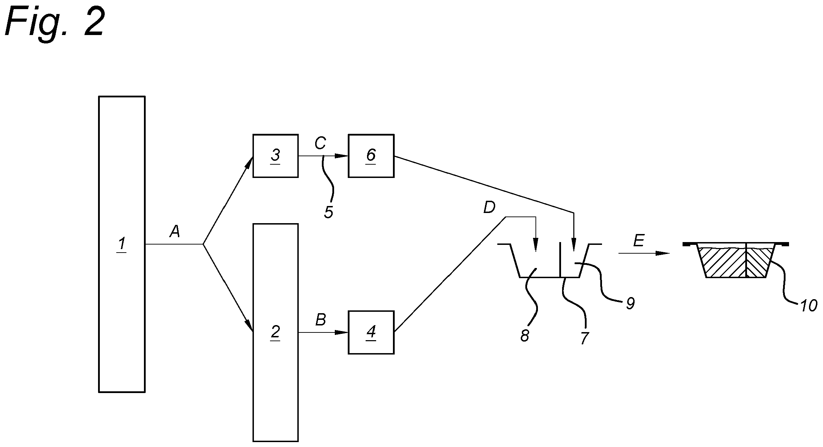

Figure 2 provides a schematic representation of a method of preparing a single-serve capsule according to the invention. Step A of the depicted method comprises de-alcholisation of a non-hopped alcoholic beer (1), e.g. a non-hopped pilsner having an ethanol content of 5% ABV to produce a non-alcoholic beer (2) and an alcoholic liquid (3) . Step B comprises concentration of the non-alcoholic beer by means of reverse osmosis to produce a liquid beer concentrate (4). Step C comprises mixing of pre-isomerised hop extract (5) with the alcoholic liquid (3) produced in step 1 to produce an alcoholic liquid containing dissolved hop acids (6). Step D comprises the filling of a two-compartment single serve capsule (7) by introducing the liquid beer concentrate (4) in one compartment (8) of the capsule (7) and the alcoholic liquid containing disscolved hop acids (6) in the other compartment (9) of the same capsule (7). Step E comprises the sealing of the filled capsule to produce a sealed capsule (10).

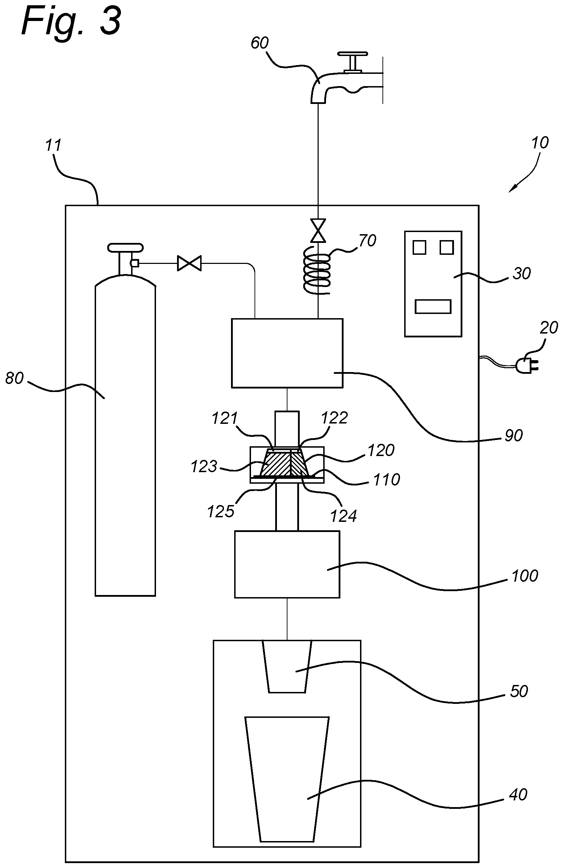

Figure 3 shows a representation of a device (10) for preparing a reconstituted beer using a single serve capsule as depicted in Figure 1. The device includes a housing (11) which houses the mechanical and electronic components of the device (10). The housing (11) can be formed of plastic and/or metal.

The device (10) comprises a power supply (20) and a control system (30) operable to activate the device and control functions of the device (e.g. the volume, temperature and/or alcohol content of the dispensed reconstituted beer). Also shown is an empty glass (40) that is positioned underneath the dispensing unit (50).

The device (10) also includes a source of water in the form of a water tap (60) and a cooling unit (70). The device (10) further comprises a cylinder (80) containing pressurised carbon dioxide, a carbonation unit (90), a mixing unit (100) and a receptacle (110) for receiving a two-compartment single serve capsule (120).

The single serve capsule (120) comprises a first compartment (121) containing a liquid beer concentrate (123) and a second compartment (122) containing an alcoholic liquid (124). The compartments (121, 122) are sealed by a foil (125).

The device (10) comprises means for opening both the top end and bottom end of the first and second compartments (121,122) of the single serve capsule (120).

In use, a consumer can place the single serve capsule (120) in the receptacle (110) of the device (10). Next, the consumer can activate the device (10) using the control system (30) and await dispensing of the reconstituted beer from the dispensing unit (50) into the glass (40).

Upon activation of the device (10) water from the tap (60) and pressurized carbon dioxide from the cylinder (80) are dispensed to the carbonation unit (90). During its passage to the carbonation unit (90) the water is cooled by the cooling unit (70). Once the adequate amounts of water and carbon dioxide have been mixed in the carbonation unit (90), the carbonated is released from the carbonation unit (90) and flows through the single serve capsule (120) to the mixing unit (100). The stream of carbonated water from the carbonation unit (90) follows two different flow paths, one flow path passes through the first compartment (121) of the single serve capsule (120) while the other flow path passes through the second compartment (123) of the single serve capsule (120).

While passing through the single serve capsule (120), the carbonated water washes out the liquid beer concentrate (123) and the alcoholic liquid (124) into the mixing unit (100). In the mixing unit (100) the carbonated water, the washed out liquid beer concentrate and the washed out alcoholic liquid are intimately mixed to produce a clear reconstituted beer.

Next the clear reconstituted beer is released from the mixing unit (100) through the dispensing unit (50) into glass (40) under the formation of a foam head.

It will be understood that in the device of Figure 1 the single serve capsule (120) may be replaced by two separate capsules, one containing the liquid beer concentrate, the other containing the alcoholic liquid.

The invention is further illustrated by the following non-limiting examples.

### EXAMPLES

### Example 1

A non-hopped lager (containing 5% ABV was de-alcoholised by vacuum distillation (Schmidt-Bretten, Bretten, Germany - feed: 5 hL/hr; steam mass flow rate: 100 kg/h; outlet pressure: 3.5 bar; vacuum setting: 90 mbar; outlet temperature: 3°C). The resulting de-alcoholised beer had an ethanol content of 0.01% ABV.

Distillate produced during de-alcoholisation was recovered and analysed. The results are shown in Table 1.

**Table 1**

| | |
|---|---|
| Ethanol | 60 wt.% |
| Ethyl acetate | 50.2 mg/L |
| Isoamyl acetate | 4.56 mg/L |
| Amyl alcohols | 206 mg/L |
| Phenylethyl alcohol | 5.09mg/L |
| Phenyl ethyl acetate | 2.77 mg/L |

The dealcoholized non-hopped lager was concentrated by means of nanofiltration using the following set-up:

### Nanofiltration membrane

| **Type** | Configuration: Spiral wound |
|---|---|
| | Membrane polymer: Composite polyamide |
| | Brine spacer material: Polypropylene |

| **Specifications** | Permeate Flow: |
|---|---|
| | • MgSO₄: 7.6 m³/d |
| | • NaCl: 9.5 m³/d |
| | Stabilised salt rejection¹: |
| | • MgSO₄: >97% (2000 ppm, 4.8 bar, 25 °C, 15% recovery, pH 6.5) |
| | • NaCl: 89-95% (500 ppm, 4.8 bar, 25 °C, 15% recovery, pH 7.0) |
| | Nominal membrane area: 7.9 m² |

| | |
|---|---|
| ¹ Equates to a MW cut-off of appr. 200 Da | |

### Configuration

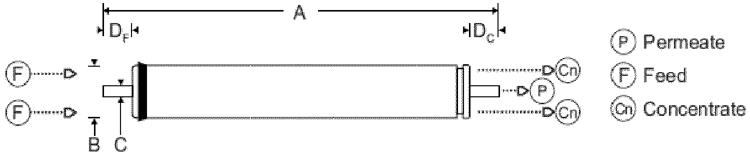

| | |
|---|---|
| A (total length) | = 1016 mm |
| B (ATD diameter) | = 100.3 mm |
| C (connection diameter) | = 19.1 mm |
| D_{F} (core tube extension - feed side) | = 26.7 mm |
| D_{C} (core tube extension - conc. side) | = 26.7 mm |

### Maximum operating limits

- Pressure: 80 bar
- Temperature: 28 °C
- Pressure drop: 0.7 bar
- Feed flow: 3.6 m³/h
- Chlorine concentration: <0.1 ppm
- Feed water SDI (15 min.) : 5.0
- Feed water turbidity: 1.0 NTU
- Feed water pH: 3.0-10.0
- Maximum ratio of concentrate to permeate flow for any element: 5:1

### Filtration run

Circulation of the beer was effected by a piston pump. This pump has a capacity of 1 m³/h and a maximum discharge pressure of 20-80 bar. The test-unit was limited to approximately 30 bar and was protected by means of an overpressure relief valve having a set-point of 40 bar.

Initial permeate production started at a pressure of around 15 bar (osmotic pressure).

In total 100 litres of beer were filtered, yielding 84.6 litres of permeate and 16.1 litres of liquid concentrate. Consequently, the concentration factor achieved was 100/15.4 = 6.5.

The composition of the beer concentrate so obtained is shown in Table 2.

**Table 2**

| Acetic acid | 310 mg/L |
|---|---|
| Riboflavin | 890 µg/L |
| Oleic acid | 1040 µg/L |
| Linoleic acid | 980 µg/L |
| Alpha-linolenic acid | 630 µg/L |
| Free amino nitrogen | 310 mg/L |
| Maltose | 1.1 g/L |
| Maltotriose | 7.0 g/L |
| Maltotetraose | 22 g/L |

The liquid beer concentrate had a surface tension of 46 mN/m.

### Comparative Example A

A commercial hopped lager beer having an alcohol content of 5.0% ABV and iso-alpha acids content of 19 mg/L was concentrated by means of nanofiltration using the same set-up as in Example 1.

Initial permeate production started at a pressure of around 4 bar (osmotic pressure). In total 200 litres of beer were filtered, yielding 172.3 litres of permeate and 27.7 litres of concentrate. Consequently, the concentration factor achieved was 200/27.7 = 7.2.

The hopped, alcoholic beer concentrate so obtained was cloudy, had an ethanol content of 4.71% ABV, a specific gravity of 1.8298 (20°P) and a surface tension of 39.7 mN/m. The concentrate contained 78.7 mg/L iso-alpha acids, meaning that 42.5% of the iso-alpha acids were lost during the nanofiltration step.

### Example 2

30 mL of the beer concentrate of Example 1 was combined with 170 mL of carbonated water having an ethanol content of 5.9% ABV to produce a reconstituted beer having a temperature of 5°C.

The reconstituted beer so obtained was clear (i.e. not hazy) and had the typical yellow colour of a lager, as well as satisfactory foam properties.

The evaluation of the reconstituted beer by an expert panel showed that this beer had a pleasant taste similar to that of ordinary lagers.

### Example 3

30 mL of the beer concentrate of Example 1 is combined with 170 mL of carbonated water having an ethanol content of 5.9% ABV to produce a reconstituted beer having a temperature of 5°C.This time the ethanol containing carbonated water is prepared by mixing 16.6 parts by weight of the alcoholic distillate of Example 1 with 153.3 parts by weight of carbonated water.

Again, the reconstituted beer so obtained is clear (i.e. not hazy) and has the typical yellow colour of a lager, as well as satisfactory foam properties.

The evaluation of the reconstituted beer by an expert panel shows that this beer had a pleasant taste that is preferred over the taste of the reconstituted beer of Example 2.

### Example 4

The liquid beer concentrate of Comparative Example A and the beer concentrate of Example 1 were standardised to a concentration factor of 6 (*i.e.* 6-fold more concentrated than the original non-hopped lager) by adding a diluent as shown in Table 3.

**Table 3**

| **Sample** | **Liquid beer concentrate** | **Diluant** |
|---|---|---|
| A | Comparative Example A | Demineralised water |
| B | Example 1 | Demineralised water |
| C | Example 1 | Demineralised water and ethanol to produce a concentrate containing 5% ABV ethanol |
| D | Example 1 | Demineralised water and pre-isomerised hop extract, to produce a concentrate containing 120 mg/L of iso-alpha acids |

Following preparation, the samples were kept at 0°C for 7 days. Next, the turbidity of the samples was measured at 0°C (in triplicate) at angles of scatter of 25° and 90°, using a Sigrist photometer. The average results are shown in Table 4, in EBC units.

**Table 4**

| | **Turbidity** | |
|---|---|---|
| **Sample** | **90°** | **25°** |
| A | >100 | >100 |
| B | 46.07 | 65.93 |
| C | 42.97 | 62.17 |
| D | 62.80 | 78.33 |

These results showed that the introduction of iso-alpha acids into the beer concentrate caused haze formation, probably as a result of precipitation of iso-alpha acids.

Aliquots of samples A, B, C and D are stored at 30°C and 40°C for 3 months during which period concentration levels of ethyl esters, turbidity and colour are monitored.

It is found that samples B and D are more stable than the other samples. Unlike samples B and D, samples A and C show significant formation of ethyl esters during the storage period.

### Example 5

A de-alcoholised non-hopped lager and an alcoholic distillate are produced in the same way as in Example 1.

The de-alcoholised non-hopped beer is concentrated by means of reverse osmosis using a reverse osmosis flat sheet filtration membrane made of thin film composite comprising a polyamide membrane layer on a polyester (PET) support material (RO90, ex Alfa Laval, operating pressure 5-25 bar). This membrane has a rejection of at least 90%, measured on 2000 ppm NaCl, at 9 bar and 25°C.

### Example 6

A single serve capsule according to the invention is prepared using a capsule comprising two compartments. One compartment (compartment A) has an internal volume of 20 mL, the other compartment (compartment B) has an internal volume of 35 mL.

The alcoholic distillate of Example 1 is mixed with a pre-isomerised hop extract to produce a solution containing 210 mg/L iso-alpha acids.

18 mL of the concentrated alcoholic liquid containing hop extract is introduced in compartment A of the capsule. Furthermore, 32 mL of the liquid beer concentrate of Example 1 is introduced in compartment B. After filling, the compartments are sealed with a flexible foil.

### Example 7

A dealcoholized non-hopped lager was concentrated by means of nanofiltration as described in Example 1. The beer concentrate so obtained (Concentrate A) was subjected to accelerated storage at 30°C and 40°C. The same storage tests were conducted with the same concentrate after ethanol had been added in a concentration of 5 wt.% (Concentrate B).

Before the storage test and after 3 months storage the concentration levels of a number of beer flavour substances were determined. The results of these analysis are shown in Table 5.

**Table 5**

| **Samples** | | **Microgram/L** | | | | | |
|---|---|---|---|---|---|---|---|
| | | Ethyl octanoate | Ethyl acetate | Ethyl propionate | Ethyl butanoate | Ethyl 3-methyl-butanoate | Ethyl phenyl-acetate |
| A | Fresh | 0 | 640 | 4.7 | 7.9 | 0.1 | 0.0 |
| | 30°C | 0 | 400 | 4.2 | 6.2 | 0.1 | 0.0 |
| | 40°C | 0 | 320 | 4.7 | 6.0 | 0.2 | 0.0 |
| B | Fresh | 0 | 720 | 20 | 52 | 1.2 | 0.0 |
| | 30°C | 4,600 | 2,040 | 74 | 163 | 9.7 | 0.2 |
| | 40°C | 4,320 | 4,040 | 152 | 230 | 25 | 0.5 |

### Example 8

A lager beer having an ethanol content of 5 vol.% was concentrated by means of nanofiltration as described in Comparative Example A. Accelerated storage tests were conducted with this concentrate (Concentrate A) at 30°C and 40°C.

Before the storage test and after 3 months the concentration levels of a number of beer flavour substances were determined. The results of these analyses are shown in Table 6.

**Table 6**

| **Samples** | **Microgram/L** | |
|---|---|---|
| | Ethyl 3-methylbutanoate | Ethyl phenylacetate |
| Fresh | 8.5 | 0.0 |
| 30°C | 23 | 0.2 |
| 40°C | 47 | 0.4 |

### Example 9

Two reconstituted beers were prepared by mixing 32 mL of beer concentrate, with 11.4 mL of alcoholic liquid and 205 mL of carbonated water (Royal Club^{™} soda water, the Netherlands).

The compositions of the beer concentrates and the alcoholic liquids used in the preparation of the reconstituted beers are shown in Table 7.

**Table 7**

| | **Reconstituted beer A** | **Reconstituted beer B** |
|---|---|---|
| Beer concentrate | Beer concentrate of Example 1 | Beer concentrate of Example 1, containing 6.56 mg iso-alpha acids per mL |
| Alcoholic liquid | Ethanol (95%), containing 18.42 mg iso-alpha acids per mL | Ethanol (95%) |

Reconstituted beer A was completely clear, had a nice foam head and a pleasant bitter taste. Reconstituted beer B contained some precipitate.

## Claims

1. A single-serve capsule comprising at least two compartments, including a first compartment and a second compartment; wherein the first compartment comprises a liquid concentrate of an alcohol-free beer, said liquid beer concentrate having an ethanol content of 0-1 % ABV, wherein the second compartment comprises an alcoholic liquid containing 12-100 wt.% ethanol and 0-88 wt.% water, and wherein ethanol and water together constitute 80-100 wt.% of the alcoholic liquid.

2. Single-serve capsule according to claim 1, wherein the liquid beer concentrate contains 250-3,000 µg/L of riboflavin.

3. Single serve capsule according to claim 1 or 2, wherein the liquid beer concentrate contains 10-100 g/L of maltotetraose.

4. Single serve capsule according to any one of the preceding claims, wherein the liquid beer concentrate and the alcoholic liquid are present in the capsule in a weight ratio of 7:1 to 1:1.

5. Single-serve capsule according to any one of the preceding claims, wherein the liquid beer concentrate contains 0-100 mg/L hop acids selected from iso-alpha acids, hydrogenated iso-alpha acids, hulupones and combinations thereof.

6. Single serve capsule according to any one of the preceding claims, wherein the alcoholic liquid in the second compartment contains 50-2,000 mg/L of hop acids selected from iso-alpha acids, hydrogenated iso-alpha acids, hulupones and combinations thereof.

7. Single serve capsule according to any one of the preceding claims, wherein the alcoholic liquid in the second compartment contains, per kg of ethanol, 50-2,000 mg of ethyl acetate.

8. Single serve capsule according to any one of the preceding claims, wherein the alcoholic liquid comprises a distillate obtained by distillative de-alcoholisation of an alcohol-containing beer.

9. Single serve capsule according to any one of the preceding claims, wherein the liquid beer concentrate is obtained by concentrating alcohol-free beer by means of membrane separation and/or freeze concentration.

10. Single serve capsule according to any one of the preceding claims, wherein the liquid beer concentrate comprises:
• 100-1,200 mg/L of acetic acid;
• 0-20 g/L of maltose;
• 1-30 g/L of maltotriose.

11. Single serve capsule according to any one of the preceding claims, wherein the liquid beer concentrate comprises:
• 0-300 mg/L of acetic acid;
• 80-400 g/L of maltose;
• 30-150 g/L of maltotriose.

12. A process of manufacturing a single serve capsule according to any one of the preceding claims, said process comprising:
• providing an alcohol-free beer having an ethanol content of 0-0.5% ABV;
• reducing the water content of the alcohol-free beer by means of membrane separation and/or freeze concentration to produce a liquid beer concentrate, wherein the membrane separation is selected from nanofiltration, reverse osmosis and forward osmosis;
• providing a capsule having a first compartment and a second compartment;
• introducing the liquid beer concentrate into the first compartment, optionally after having combined the liquid beer concentrate with one or more other components;
• introducing an alcoholic liquid into the second compartment, optionally after having combined the alcoholic liquid with one or more other components; and
• closing the first and second compartment of the capsule.

13. Process according to claim 12, wherein the alcohol-free beer is produced by:
• providing an alcoholic beer having an ethanol content of 3-12% ABV; and
• removing ethanol from the beer by means of distillation, thereby producing an alcohol-free beer and an ethanol-containing distillate.

14. Process according to claim 12, wherein the alcohol-free beer is produced by means of cold-contact fermentation.

15. A method of preparing beer from a liquid beer concentrate, said method comprising:
• introducing the single serve capsule according to any one of claims 1-11 into a beverage preparation device;
• releasing the liquid beer concentrate from the first compartment;
• releasing the alcoholic liquid from the second compartment;
• combining the released liquid beer concentrate, the released alcoholic liquid, water and carbon dioxide to produce an alcoholic beer;
• dispensing the alcoholic beer.

## Patentansprüche

1. Einzelportionskapsel umfassend mindestens zwei Kammern, einschließlich einer ersten Kammer und einer zweiten Kammer; wobei die erste Kammer ein flüssiges Konzentrat eines alkoholfreien Biers umfasst, wobei das flüssige Bierkonzentrat einen Ethanolgehalt von 0-1 Vol.-% hat, wobei die zweite Kammer eine alkoholische Flüssigkeit umfasst, die 12-100 Gew.-% Ethanol und 0-88 Gew.-% Wasser enthält, und wobei Ethanol und Wasser zusammen 80-100 Gew.-% der alkoholischen Flüssigkeit ausmachen.

2. Einzelportionskapsel nach Anspruch 1, wobei das flüssige Bierkonzentrat 250-3.000 µg/L Riboflavin enthält.

3. Einzelportionskapsel nach Anspruch 1 oder 2, wobei das flüssige Bierkonzentrat 10-100 g/L Maltotetraose enthält.

4. Einzelportionskapsel nach einem der voranstehenden Ansprüche, wobei das flüssige Bierkonzentrat und die alkoholische Flüssigkeit in der Kapsel in einem Gewichtsverhältnis von 7:1 bis 1:1 vorhanden sind.

5. Einzelportionskapsel nach einem der voranstehenden Ansprüche, wobei das flüssige Bierkonzentrat 0-100 mg/L Hopfensäuren enthält, die aus Iso-Alphasäuren, hydrierten Iso-Alphasäuren, Huluponen und Kombinationen dieser ausgewählt sind.

6. Einzelportionskapsel nach einem der voranstehenden Ansprüche, wobei die alkoholische Flüssigkeit in der zweiten Kammer 50-2.000 mg/L Hopfensäuren enthält, die aus Iso-Alphasäuren, hydrierten Iso-Alphasäuren, Huluponen und Kombinationen dieser ausgewählt sind.

7. Einzelportionskapsel nach einem der voranstehenden Ansprüche, wobei die alkoholische Flüssigkeit in der zweiten Kammer 50-2.000 mg Ethylacetat pro kg Ethanol enthält.

8. Einzelportionskapsel nach einem der voranstehenden Ansprüche, wobei die alkoholische Flüssigkeit ein Destillat enthält, das durch destillative Entalkoholisierung eines alkoholhaltigen Biers gewonnen wurde.

9. Einzelportionskapsel nach einem der voranstehenden Ansprüche, wobei das flüssige Bierkonzentrat durch Konzentrieren von alkoholfreiem Bier mittels Membrantrennung und/oder Gefrierkonzentration gewonnen wird.

10. Einzelportionskapsel nach einem der voranstehenden Ansprüche, wobei das flüssige Bierkonzentrat Folgendes umfasst:
• 100-1.200 mg/L Essigsäure;
• 0-20 g/L Maltose;
• 1-30 g/L Maltotriose.

11. Einzelportionskapsel nach einem der voranstehenden Ansprüche, wobei das flüssige Bierkonzentrat Folgendes umfasst:
• 0-300 mg/L Essigsäure;
• 80-400 g/L Maltose;
• 30-150 g/L Maltotriose.

12. Verfahren zum Herstellen einer Einzelportionskapsel nach einem der voranstehenden Ansprüche, wobei das Verfahren umfasst:
• Bereitstellen eines alkoholfreien Biers mit einem Ethanolgehalt von 0-0,5 Vol.-%;
• Reduzieren des Wassergehalts des alkoholfreien Biers mittels Membrantrennung und/oder Gefrierkonzentration, um ein flüssiges Bierkonzentrat herzustellen, wobei die Membrantrennung ausgewählt ist aus Nanofiltration, Umkehrosmose und Vorwärtsosmose;
• Bereitstellen einer Kapsel mit einer ersten Kammer und einer zweiten Kammer;
• Einbringen des flüssigen Bierkonzentrats in die erste Kammer, optional nachdem das flüssige Bierkonzentrat mit einer oder mehreren anderen Komponenten kombiniert wurde;
• Einbringen einer alkoholischen Flüssigkeit in die zweite Kammer, optional nachdem die alkoholische Flüssigkeit mit einer oder mehreren anderen Komponenten kombiniert wurde; und
• Verschließen der ersten und zweiten Kammer der Kapsel.

13. Verfahren nach Anspruch 12, wobei das alkoholfreie Bier hergestellt wird durch:
• Bereitstellen eines alkoholischen Biers mit einem Ethanolgehalt von 3-12 Vol.-%; und
• Entfernen des Ethanols aus dem Bier mittels Destillation, wodurch ein alkoholfreies Bier und ein ethanolhaltiges Destillat hergestellt wird.

14. Verfahren nach Anspruch 12, wobei das alkoholfreie Bier durch Kaltkontaktfermentation hergestellt wird.

15. Verfahren zur Herstellung von Bier aus einem flüssigen Bierkonzentrat, wobei das Verfahren umfasst:
• Einführen der Einzelportionskapsel nach einem der Ansprüche 1-11 in eine Vorrichtung zur Zubereitung von Getränken;
• Freisetzen des flüssigen Bierkonzentrats aus der ersten Kammer;
• Freisetzen der alkoholischen Flüssigkeit aus der zweiten Kammer;
• Kombinieren von freigesetztem flüssigen Bierkonzentrat, freigesetzter alkoholischer Flüssigkeit, Wasser und Kohlenstoffdioxid, um ein alkoholisches Bier herzustellen;
• Ausgeben des alkoholischen Bieres.

## Revendications

1. Capsule à usage unique comprenant au moins deux compartiments, incluant un premier compartiment et un second compartiment ; dans laquelle le premier compartiment comprend un concentré liquide d'une bière sans alcool, ledit concentré liquide de bière présentant une teneur en éthanol de 0 à 1 % ABV, dans laquelle le second compartiment comprend un liquide alcoolique contenant de 12 à 100 % en poids d'éthanol et de 0 à 88 % en poids d'eau, et dans laquelle l'éthanol et l'eau constituent ensemble de 80 à 100 % en poids du liquide alcoolique.

2. Capsule à usage unique selon la revendication 1, dans laquelle le concentré liquide de bière contient de 250 à 3 000 µg/L de riboflavine.

3. Capsule à usage unique selon la revendication 1 ou 2, dans laquelle le concentré liquide de bière contient de 10 à 100 g/L de maltotétraose.

4. Capsule à usage unique selon l'une quelconque des revendications précédentes, dans laquelle le concentré liquide de bière et le liquide alcoolique sont présents dans la capsule à un rapport pondéral de 7:1 à 1:1.

5. Capsule à usage unique selon l'une quelconque des revendications précédentes, dans laquelle le concentré liquide de bière contient de 0 à 100 mg/L d'acides de houblon choisis parmi des acides iso-alpha, des acides iso-alpha hydrogénés, des hulupones et des combinaisons de ceux-ci.

6. Capsule à usage unique selon l'une quelconque des revendications précédentes, dans laquelle le liquide alcoolique dans le second compartiment contient de 50 à 2 000 mg/L d'acides de houblon choisis parmi des acides iso-alpha, des acides iso-alpha hydrogénés, des hulupones et des combinaisons de ceux-ci.

7. Capsule à usage unique selon l'une quelconque des revendications précédentes, dans laquelle le liquide alcoolique dans le second compartiment contient, par kg d'éthanol, de 50 à 2 000 mg d'acétate d'éthyle.

8. Capsule à usage unique selon l'une quelconque des revendications précédentes, dans laquelle le liquide alcoolique comprend un distillat obtenu par désalcoolisation par distillation d'une bière contenant de l'alcool.

9. Capsule à usage unique selon l'une quelconque des revendications précédentes, dans laquelle le concentré liquide de bière est obtenu par concentration de bière sans alcool au moyen d'une séparation par membrane et/ou d'une concentration par congélation.

10. Capsule à usage unique selon l'une quelconque des revendications précédentes, dans laquelle le concentré liquide de bière comprend :
• de 100 à 1 200 mg/L d'acide acétique ;
• de 0 à 20 g/L de maltose ;
• de 1 à 30 g/L de maltotriose.

11. Capsule à usage unique selon l'une quelconque des revendications précédentes, dans laquelle le concentré liquide de bière comprend :
• de 0 à 300 mg/L d'acide acétique ;
• de 80 à 400 g/L de maltose ;
• de 30 à 150 g/L de maltotriose.

12. Procédé de fabrication d'une capsule à usage unique selon l'une quelconque des revendications précédentes, ledit procédé comprenant les étapes consistant à :
• fournir une bière sans alcool présentant une teneur en éthanol de 0 à 0,5 % ABV ;
• réduire la teneur en eau de la bière sans alcool au moyen d'une séparation par membrane et/ou d'une concentration par congélation pour produire un concentré liquide de bière, dans lequel la séparation par membrane est choisie parmi une nanofiltration, une osmose inverse et une osmose directe ;
• fournir une capsule présentant un premier compartiment et un second compartiment ;
• introduire le concentré liquide de bière dans le premier compartiment, facultativement après avoir combiné le concentré liquide de bière avec un ou plusieurs autres composants ;
• introduire un liquide alcoolique dans le second compartiment, facultativement après avoir combiné le liquide alcoolique avec un ou plusieurs autres composants ; et
• fermer les premier et second compartiments de la capsule.

13. Procédé selon la revendication 12, dans lequel la bière sans alcool est produite par les étapes consistant à :
• fournir une bière alcoolisée présentant une teneur en éthanol de 3 à 12 % ABV ; et
• éliminer l'éthanol à partir de la bière par distillation, en produisant ainsi une bière sans alcool et un distillat contenant de l'éthanol.

14. Procédé selon la revendication 12, dans lequel la bière sans alcool est produite au moyen d'une fermentation par contact froid.

15. Procédé de préparation de bière à partir d'un concentré liquide de bière, ledit procédé comprenant les étapes consistant à :
• introduire la capsule à usage unique selon l'une quelconque des revendications 1 à 11 dans un dispositif de préparation de boisson ;
• libérer le concentré liquide de bière à partir du premier compartiment ;
• libérer le liquide alcoolique à partir du second compartiment ;
• combiner le concentré liquide de bière libéré, le liquide alcoolique libéré, de l'eau et du dioxyde de carbone pour produire une bière alcoolisée ;
• distribuer la bière alcoolisée.
